# EUROPÄISCHE PATENTSCHRIFT

(11) **EP 1 967 411 B1**
(45) Veröffentlichungstag und Bekanntmachung des Hinweises auf die Patenterteilung: **23.05.2012**
(21) Anmeldenummer: 08002382.3
(22) Anmeldetag: 08.02.2008
(51) Int. Cl.: B60N 2/30, B60R 5/04, B60R 7/08, B60R 13/01

(54) **Ladebodenanordnung**
Loading floor arrangement
Agencement de plancher de chargement

(30) Priorität: 05.03.2007 DE 102007010927
(43) Veröffentlichungstag der Anmeldung: 10.09.2008
(73) Patentinhaber: GM Global Technology Operations LLC, Detroit, MI 48265-3000 (US)
(72) Erfinder: Kim, Clarence, 65185 Wiesbaden (DE); Jacob, Boris, 65185 Wiesbaden (DE)
(74) Vertreter: Strauss, Peter

(56) Entgegenhaltungen:
- EP-A- 0 899 158
- EP-A- 1 342 612
- DE-A1- 3 729 837
- DE-A1- 10 204 123
- DE-A1- 10 316 887
- DE-A1- 19 811 815
- FR-A- 2 872 773

## Beschreibung

Die Erfindung betrifft eine Ladebodenanordnung für ein Kraftfahrzeug, mit deren Hilfe der Laderaum eines Kraftfahrzeugs verändert werden kann.

Eine derartige Ladebodenanordnung gemäß dem Oberbegriff des Anspruchs 1, mit deren Hilfe der Laderaum eines Kraftfahrzeugs verändert werden kann, ist beispielsweise aus der DE 102 04 123 A1, EP-A-1 342 612 und DE 198 11 815 A1 bekannt.

Aus DE 103 17 537 A1 ist eine Ladebodenanordnung für ein Kraftfahrzeug bekannt, bei der ein Rücksitz vorgesehen ist, der eine Rückenlehne und ein Sitzpolster aufweist. Um den Laderaum des Kraftfahrzeugs zu vergrößern, kann die Rückenlehne auf das Sitzpolster umgeklappt werden, so dass ein in Fahrtrichtung bewegliches Bodenelement, auf das Gegenstände abgeladen werden können, über den umgeklappten Rücksitz ausgefahren werden kann.

Nachteilig bei einer derartigen Ladebodenanordnung ist, dass der umgeklappte Rücksitz verhältnismäßig viel Raum in vertikaler Richtung benötigt, wodurch das Ladevolumen in der Höhe stark begrenzt ist. Insbesondere wenn der Rücksitz beispielsweise zur Verbesserung des Komforts ergonomisch geformt ist, ist eine derartige Labodenanordnung ungünstig, da dadurch der zur Verfügung stehende Raum im umgeklappten Zustand des Rücksitzes besonders stark beeinträchtigt ist.

Es ist die Aufgabe der Erfindung, eine Ladebodenanordnung für ein Kraftfahrzeug zu schaffen, die insbesondere bei ergonomisch geformten Rücksitzen bei Bedarf einen verbesserten Laderaum zum Transport von sperrigen Gegenständen ermöglicht.

Die Lösung der Aufgabe erfolgt erfindungsgemäß durch die Merkmale des Anspruchs 1. Vorteilhafte Ausgestaltung der Erfindung sind in den Unteransprüchen angegeben.

Die erfindungsgemäße Bodenanordnung für ein Kraftfahrzeug weist einen Rücksitz auf, der eine Rückenlehne und ein Polster aufweist. Ferner ist ein in Fahrtrichtung bewegliches Bodenelement vorgesehen, auf das Gegenstände abgelegt werden können. Erfindungsgemäß ist das Bodenelement mit der Rückenlehne verbunden, so dass die Rückenlehne gemeinsam mit dem Bodenelement bewegt werden kann. Im ausgefahren Zustand des Bodenelements ist das Sitzpolster des Rücksitzes durch das Bodenelement zumindest teilweise überdeckt, wobei das Bodenelement einen seitlich ausfahrbaren Ergänzungsboden aufweist. Der Ergänzungsboden kann insbesondere vollständig in das Bodenelement eingeschoben werden.

Dadurch, dass die Rückenlehne mit dem beweglichen Bodenelement verbunden ist, ist es lediglich erforderlich, dass das Bodenelement das Sitzpolster überdeckt. Es ist nicht erforderlich, dass das Bodenelement auch die Rückenlehne überdeckt. Dadurch wird der Laderaum in vertikaler Richtung vergrößert. Ferner kann der Rücksitz insbesondere im Bereich der Rückenlehne ergonomisch geformt sein, indem die Rückenlehne beispielsweise schalenförmig ausgestaltet ist. Derartige Ausgestaltungen der Rückenlehne führen nicht dazu, dass der Laderaum in vertikaler Richtung eingeschränkt werden müsste. Dadurch, dass das Bodenelement einen seitlich ausfahrbaren Ergänzungsboden aufweist, ist es möglich im ausgefahrenen Zustand des Bodenelements auf konstruktionsbedingte Breitenveränderungen des Kraftfahrzeuges einzugehen und zusätzliche Ladefläche bereitzustellen.

In einer bevorzugten Ausführungsform ist die Rückenlehne quer zur Fahrtrichtung beweglich mit dem Bodenelement verbunden. Der Laderaum kann dadurch in der Form und Gestaltung an die zu transportierenden Gegenstände variabel angepasst werden. Beispielsweise ist es möglich, die Rückenlehnen zweier nebeneinander angeordneter Rücksitze in der Mitte des Kraftfahrzeugs zusammen zu schieben, so dass der Laderaum in Fahrtrichtung einerseits von den Vordersitzen und im mittleren Bereich von den Rückenlehnen der Rücksitze begrenzt wird. Es wird dadurch vermieden, dass ein zu transportierender Gegenstand unbeabsichtigt zwischen den beiden Vordersitzen hindurch in den vorderen Bereich des Kraftfahrzeugs gelangen kann. Anderseits ist es möglich, die Rückenlehnen jeweils nach außen zu schieben, so dass ein besonders langer Gegenstand zwischen den beiden Vordersitzen hindurch angeordnet werden kann. Ferner ist es möglich konstruktiv vorzusehen, die beiden Rücksitze im Vergleich zu den Vordersitzen näher beieinander anzuordnen, damit für Mitfahrer, die auf den Rücksitzen sitzen, der Fahrkomfort besonders bequem ist. Gleichzeitig ist es möglich in dem Fall, dass die Rücksitze nicht benötigt werden und stattdessen zusätzlicher Laderaum erforderlich ist, die Rückenlehnen an die Vordersitze heran zu schieben und quer zur Fahrtrichtung an den jeweiligen Vordersitz aufzurichten. Insbesondere bei schalenförmig ausgestalteten ergonomischen Rückenlehnen ist es möglich, dass die Rückenlehne die Vorderlehne der Vordersitzes teilweise umgreifen kann, wodurch eine besonders platzsparende und gleichzeitig sicherere Positionierung der Rückenlehne erfolgen kann.

In einer Ausführungsform kann der Ergänzungsboden insbesondere längenverstellbar, beispielsweise teleskopierbar sein. Der Ergänzungsboden kann hierbei in Fahrtrichtung und/oder quer zur Fahrtrichtung längenverstellbar sein. Insbesondere wenn sich der Ergänzungsboden an Teilen der Karosserie, beispielsweise einem Radgehäuse abstützen kann, wird eine unbeabsichtigte Bewegung des Bodenelementes verhindert. Die Gefahr, dass die geladenen Gegenstände verrutschen, wird dadurch reduziert.

Vorzugsweise kann die Rückenlehne im maximal ausgefahrenen Zustand den Vordersitz zumindest kontaktieren und besonders bevorzugt an dem Vordersitz flächig anliegen. Der Raumbedarf für die im Moment nicht benötigte Rückenlehne kann dadurch reduziert werden.

Im maximal ausgefahrenen Zustand ist das Sitzpolster , insbesondere vollständig von dem Ladebodenelement überdeckt. Dadurch wird gewährleistet, dass das Sitzpolster beim Transport der Gegenstände nicht beschädigt wird. Ferner wird eine im Wesentlichen ebene Ladefläche bereitgestellt.

In einer bevorzugten Ausführungsform ist ein Zusatzboden vorgesehen, der gemeinsam mit dem zumindest teilweise ausgefahrenen Bodenelement eine im Wesentlichen ebene Ladefläche ausbildet. Hierzu ist der Zusatzboden insbesondere höhenverstellbar und kann mit der Fahrzeugkarosserie verbunden sein. Besonders bevorzugt ist der Zusatzboden in Fahrtrichtung längenverstellbar, beispielsweise indem der Zusatzboden teleskopierbar ist. Dadurch kann unabhängig von der Position des Bodenelementes eine im Wesentlichen ebene Ladefläche bereit gestellt werden. Zusätzlich bzw. alternativ kann das Bodenelement in Fahrtrichtung längenverstellbar, insbesondere teleskopierbar ausgestaltet sein.

Besonders bevorzugt kann das Bodenelement und/oder die Rückenlehne relativ zum Bodenelement mit Hilfe einer Betätigungsvorrichtung bewegt werden. Die Bewegung kann hierbei beispielsweise hydraulisch, pneumatisch oder elektrisch erfolgen. Die Betätigungsvorrichtung kann insbesondere über ein Steuergerät bedient werden, wobei das Steuergerät vorzugsweise im vorderen Bereich des Kraftfahrzeugs angeordnet ist, so dass der Fahrer und/oder der Beifahrer die Betätigungsvorrichtung betätigen kann.

Insbesondere kann das Bodenelement im eingefahrenen Zustand mit Hilfe einer Arretiervorrichtung arretiert werden. Dadurch wird eine unbeabsichtigte Bewegung des Bodenelementes sowie der mit dem Bodenelement verbundenen Rückenlehne vermieden. Die Rückenlehne kann lösbar mit dem Sitzpolster verbunden sein, so dass zusätzlich oder alternativ zur Arretiervorrichtung des Bodenelementes eine Feststellung der Rückenlehne bzw. des Bodenelementes erfolgen kann. Ferner ist es möglich, dass die Winkelstellung der Rückenlehne relativ zum Bodenelement eingestellt werden kann. Obwohl die Rückenlehne im Wesentlichen nur mit dem Bodenelement und im Wesentlichen nicht mit dem Sitzpolster verbunden ist, verhält sich der Rücksitz wie ein herkömmlicher Rücksitz. Das heißt die Rückenlehne kann bedarfsgerecht an die Anforderungen eines Nutzers angepasst werden.

Die Erfindung betrifft ferner ein Kraftfahrzeug, das eine erste Ladebodenanordnung und eine zweite Ladebodenanordnung aufweist, die jeweils wie vorstehend beschrieben aus- und weitergebildet sein können. Die erste Ladebodenanordnung ist für die Fahrerseite vorgesehen, während die zweite Ladebodenanordnung für die Beifahrerseite vorgesehen ist. Das Kraftfahrzeug weist also zwei nebeneinander angeordnete Ladebodenanordnungen auf. Dadurch ist es möglich, im Wesentlichen über die gesamte Breite des Kraftfahrzeugs bei Bedarf den Laderaum zu vergrößern. Besonders bevorzugt ist die erste Ladebodenanordnung und die zweite Ladebodenanordnung zueinander spiegelbildlich ausgestaltet. Dadurch wird der Konstruktions- und Herstellungsaufwand reduziert. Ferner ist die Ladebodenanordnung dadurch besser an das Karosseriedesign des Kraftfahrzeugs angepasst.

Nachfolgend wird die Erfindung unter Bezugnahme auf die anliegenden Zeichnungen anhand bevorzugter Ausführungsformen näher erläutert. Es zeigen:
- Fig. 1: eine schematische Draufsicht eines Kraftfahrzeugsinnenraums mit erfindungsgemäßen Ladebodenanordnungen,
- Fig. 2: eine schematische Draufsicht des Kraftfahrzeugsinnenraums aus Fig. 1 in einem ausgefahrenen Zustand eine der Ladebodenanordnungen,
- Fig. 3: eine schematische Seitenansicht einer erfindungsgemäßen Ladebodenanordnung,
- Fig. 4: eine schematische perspektivische Ansicht der Ladebodenanordnung aus Fig. 3,
- Fig. 5: eine perspektivische Ansicht der ausgefahrenen Ladebodenanordnung in einer ersten Position und
- Fig. 6: eine perspektivische Ansicht der Ladebodenanordnung aus Fig. 5 in einer zweiten Position.

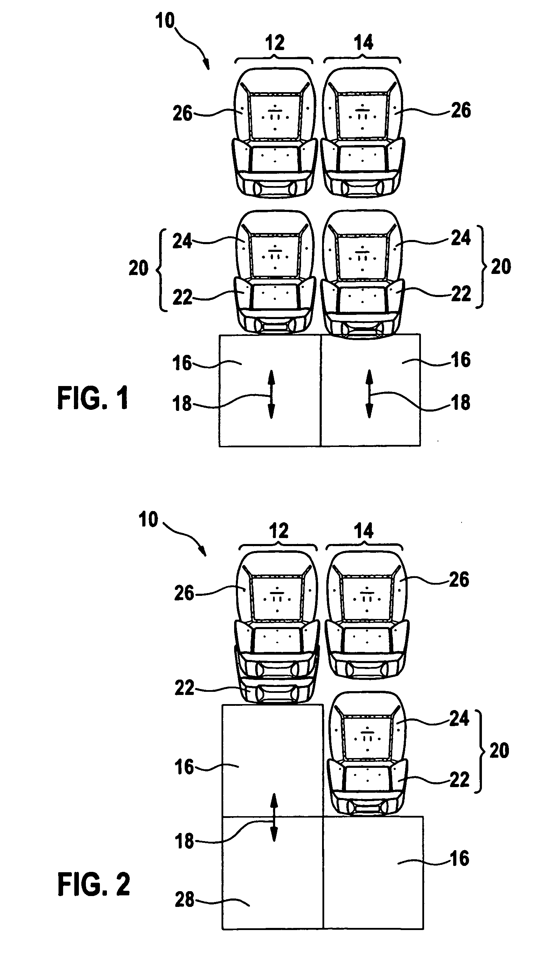

Bei dem in Fig. 1 dargestellten Kraftfahrzeuginnenraum 10, ist eine erste Ladebodenanordnung 12 und eine zweite Ladebodenanordnung 14 vorgesehen. Die erste Ladebodenordnung 12 ist der Fahrerseite zugeordnet, während die zweite Ladebodenanordnung 14 der Beifahrerseite zugeordnet ist. Die Ladebodenanordnungen 12, 14 weisen jeweils ein in Fahrtrichtung bewegliches Bodenelement 16 auf, das in Richtung eines Pfeils 18 verschoben werden kann. Vor dem Bodenelement 16 ist jeweils ein Rücksitz 20 angeordnet, der eine Rücklehne 22 und ein Sitzpolster 24 aufweist.

Die Rückenlehne 22 ist mit dem Bodenelement 16 verbunden, so dass die Rückenlehne 22 gemeinsam mit dem Bodenelement 16 verschoben wird, wenn das Bodenelement 16 in Richtung des Pfeils 18 bewegt wird. Bei dem in Fig. 2 dargestellten maximal ausgefahrenen Zustand der Ladebodenanordnung 12 ist das Bodenelement 16 soweit ausgefahren, dass die Rückenlehne 22 an einem Vordersitz 26 anliegt. Unterhalb des Bodenelements 16 ist ein Zusatzboden 28 vorgesehen, der im ausgefahrenen Zustand des Bodenelements 16 zum Vorschein kommt und insbesondere höhen- und/oder längenverstellbar ist.

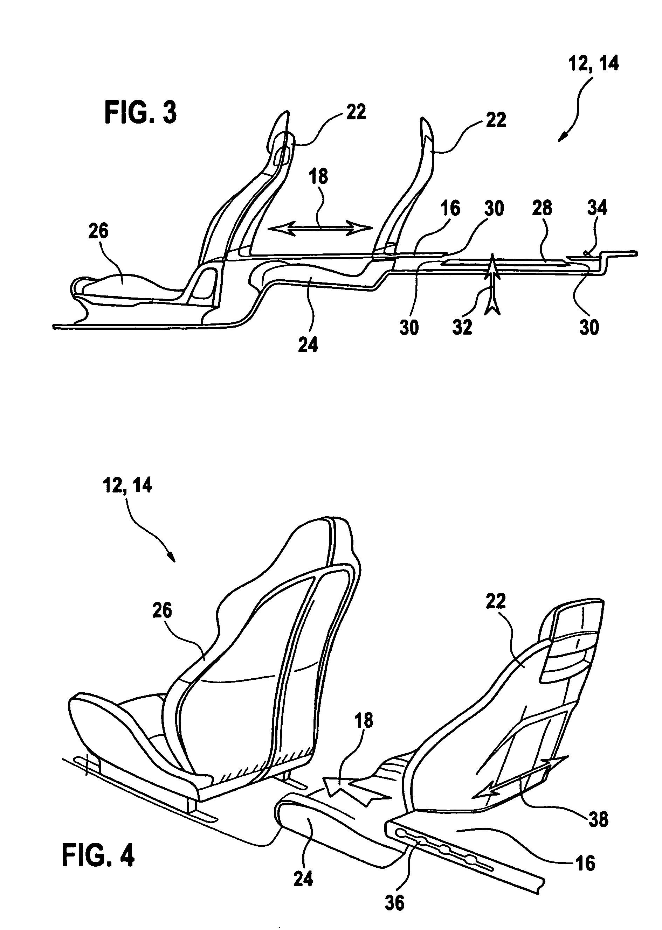

Im ausgefahrenen Zustand des Bodenelementes 16 ist das Sitzpolster 24 des Rücksitzes 20 von dem Bodenelement 16 überdeckt (Fig. 3). Der Bodenelement 16 und der Zusatzboden 28 können insbesondere angeschrägte Seitenbereiche 30 aufweisen, so dass der Zusatzboden 28 den Bodenelement 16 automatisch in den maximal ausgefahrenen Zustand bewegen kann, wenn der Zusatzboden 28 in Richtung des Pfeils 32 nach oben bewegt wird. Ferner kann eine Arretiervorrichtung 34 vorgesehen sein, mit deren Hilfe das Bodenelement 16 und/oder der Zusatzboden 28 im eingefahrenen und/oder ausgefahrenen Zustand arretiert werden kann.

Das Bodenelement 16 kann beispielsweise seitlich angebrachte Führungselemente 36 aufweisen, mit deren Hilfe das Bodenelement 16 in einer Schiene oder dergleichen geführt sein kann (Fig. 4). Ferner kann die Rückenlehne 22 quer zur Fahrtrichtung entlang eines Pfeils 38 verschiebbar mit dem Bodenelement 16 verbunden sein, um im ausgefahrenen Zustand die ergonomisch schalenförmig ausgestaltete Rückenlehne 22 an den Vordersitz 26 anschmiegen zu lassen.

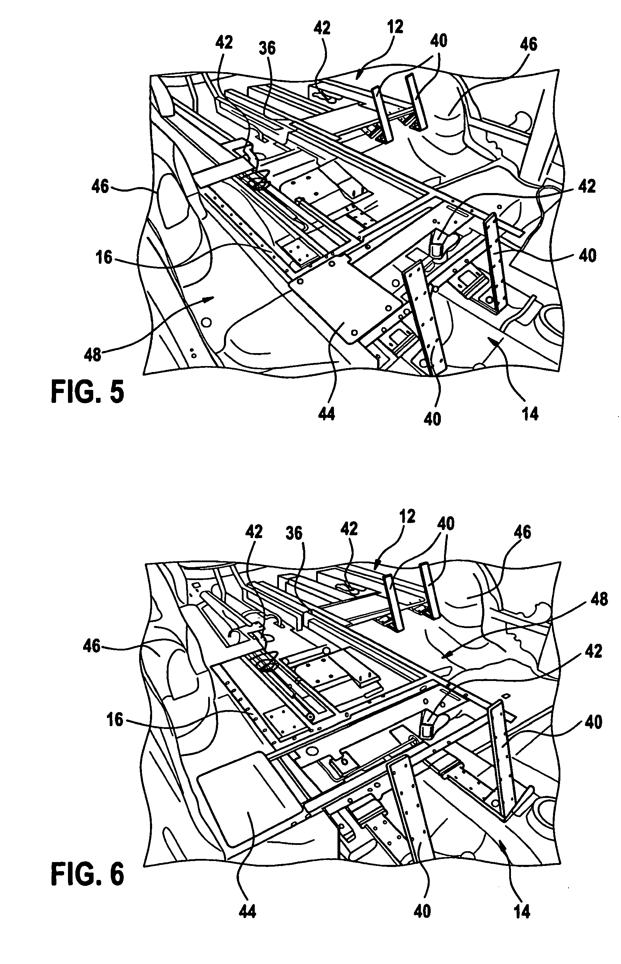

In Fig. 5 und Fig. 6 ist jeweils eine Unterkonstruktion für die Ladebodenanordnung 12, 14 dargestellt. Das Bodenelement 16 ist hierbei ohne Ablagefläche dargestellt, um das Innenleben des Bodenelements 16 besser darstellen zu können. Das Bodenelement 16 weist im vorderen Bereich Winkel 40 auf, an welche jeweils die Rückenlehne 22 befestigt werden kann. Die Ladebodenanordnung 12, 14 weist verschiedene Betätigungsvorrichtungen 42 auf, um das Bodenelement 16 bzw. mit dem Bodenelement verbundene Bauteile zu bewegen. Das Bodenelement 16 weist ferner einen seitlich ausfahrbaren Ergänzungsboden 44 auf, der im eingefahrenen Zustand (Fig. 5) mit Hilfe des Bodenelementes 16 an einem Radgehäuse 46 einer Kraftfahrzeugkarosserie 48 vorbeibewegt und anschließend vor dem Radgehäuse 46 ausgefahren werden kann (Fig. 6). Dadurch ist es möglich, auf einer verhältnismäßig niedrigen Höhe auch den Raumbereich zwischen dem Radgehäuse 46 und dem Vordersitz 26 als Laderaum mit einer im Wesentlichen ebenen Ladefläche zu nutzen.

### Bezugszeichenliste

- 10: Kraftfahrzeuginnenraum
- 12: erste Ladebodenanordnung
- 14: zweite Ladebodenanordnung
- 16: Bodenelement
- 18: Pfeil
- 20: Rücksitz
- 22: Rückenlehne
- 24: Sitzpolster
- 26: Vordersitz
- 28: Zusatzboden
- 30: angeschrägter Seitenbereich
- 32: Pfeil
- 34: Arretiervorrichtung
- 36: Führungselement
- 38: Pfeil
- 40: Winkel
- 42: Betätigungsvorrichtung
- 44: Ergänzungsboden
- 46: Radgehäuse
- 48: Kraftfahrzeugkarosserie

## Patentansprüche

1. Ladebodenanordnung für ein Kraftfahrzeug, umfassend
ein in Fahrtrichtung bewegliches Bodenelement (16) zur Ablage von Gegenständen und
einen Rücksitz (20), der eine Rückenlehne (22) und ein Sitzpolster (24) aufweist,
wobei mit dem Bodenelement (16) die Rückenlehne (22) verbunden ist und im ausgefahrenen Zustand das Bodenelement (16) das Sitzpolster (24) zumindest teilweise überdeckt,
**dadurch gekennzeichnet, dass**
das Bodenelement (16) einen seitlich ausfahrbaren Ergänzungsboden (44) aufweist.

2. Ladebodenanordnung nach Anspruch 1 **dadurch gekennzeichnet, dass** die Rückenlehne (22) relativ zum Bodenelement (16) quer zur Fahrtrichtung beweglich mit diesem verbunden ist.

3. Ladebodenanordnung nach einem der Ansprüche 1 oder 2 **dadurch gekennzeichnet, dass** die Rückenlehne (22) im maximal ausgefahrenen Zustand einen Vordersitz (26) zumindest kontaktiert.

4. Ladebodenanordnung nach einem der Ansprüche 1 bis 3 **dadurch gekennzeichnet, dass** im maximal ausgefahrenen Zustand das Sitzpolster (24) vollständig von dem Bodenelement (16) überdeckt ist.

5. Ladebodenanordnung nach einem der Ansprüche 1 bis 4 **dadurch gekennzeichnet, dass** ein insbesondere höhenverstellbarer Zusatzboden (28) zur Ausbildung einer im Wesentlichen ebenen Ladefläche mit dem Bodenelement (16) vorgesehen ist.

6. Ladebodenanordnung nach einem der Ansprüche 1 bis 5 **dadurch gekennzeichnet, dass** das Bodenelement (16) und/oder der Zusatzboden (28) und/oder der Ergänzungsboden (44) längenverstellbar, insbesondere teleskopierbar ist.

7. Ladebodenanordnung nach einem der Ansprüche 1 bis 6 **dadurch gekennzeichnet, dass** mindestens eine Betätigungsvorrichtung (42) zur Bewegung des Bodenelements (16) und/oder zur Bewegung der Rückenlehne (22) relativ zum Bodenelement (16) vorgesehen ist.

8. Ladebodenanordnung nach einem der Ansprüche 1 bis 7 **dadurch gekennzeichnet, dass** das Bodenelement (16) über eine Arretiervorrichtung (34) im eingefahrenen Zustand arretierbar ist.

9. Kraftfahrzeug mit einer ersten Ladebodenanordnung (12) nach einem der Ansprüche 1 bis 8 für eine Fahrerseite und einer zweiten Ladebodenanordnung (14) nach einem der Ansprüche 1 bis 8 für eine Beifahrerseite, wobei die erste Ladebodenanordnung (12) und die zweite Ladebodenanordnung (14) zueinander spiegelbildlich ausgestaltet sind.

## Claims

1. A loading floor arrangement for a motor vehicle, comprising a floor element (16) movable in the travelling direction for depositing items, and a rear seat (20) having a backrest (22) and a seat cushion (24), with the backrest (22) being connected with the floor element (16) and the floor element (16) at least partly covering the seat cushion (24) in the extended state, **characterized in that** the floor element (16) has a laterally extensible supplementary floor (44).

2. A loading floor arrangement according to claim 1, **characterized in that** the backrest (22) is movably connected with the floor element (16) transversely to the travelling direction relative to the floor element (16).

3. A loading floor arrangement according to one of the claims 1 or 2, **characterized in that** the backrest (22) at least touches a front seat (26) in the maximally extended state.

4. A loading floor arrangement according to one of the claims 1 to 3, **characterized in that** in the maximally extended state the seat cushion (24) is completely covered by the floor element (16).

5. A loading floor arrangement according to one of the claims 1 to 4, **characterized in that** an especially height-adjustable additional floor (28) is provided for forming a substantially flat loading platform with the floor element (16).

6. A loading floor arrangement according to one of the claims 1 to 5, **characterized in that** the floor element (16) and/or the additional floor (28) and/or the supplementary floor (44) is length-adjustable, especially telescopically extendable.

7. A loading floor arrangement according to one of the claims 1 to 6, **characterized in that** at least one actuating apparatus (42) is provided for moving the floor element (16) and/or for moving the backrest (22) relative to the floor element (16).

8. A loading floor arrangement according to one of the claims 1 to 7, **characterized in that** the floor element (16) can be locked in the retracted state by a locking apparatus (34).

9. A motor vehicle with a first loading floor arrangement (12) according to one of the claims 1 to 8 for a driver's side and a second loading floor arrangement (14) according to one of the claims 1 to 8 for a passenger side, with the first loading floor arrangement (12) and the second loading floor arrangement (14) being arranged to be mirror-inverted with respect to each other.

## Revendications

1. Dispositif de plancher de coffre pour un véhicule à moteur, comprenant
un élément de plancher (16) mobile dans le sens de la marche pour la dépose d'objets et un siège arrière (20) qui comporte un dossier (22) et un coussin d'assise (24),
dans lequel le dossier (22) est relié avec l'élément de plancher (16) et le coussin d'assise (24) recouvre au moins partiellement l'élément de plancher (16) dans l'état déployé,
**caractérisé en ce que** l'élément de plancher (16) présente un plancher complémentaire (44) pouvant être déployé latéralement.

2. Dispositif de plancher de coffre selon la revendication, **caractérisé en ce que** le dossier (22) est relié à l'élément de plancher (16) de façon mobile perpendiculairement au sens de la marche par rapport à celui-ci.

3. Dispositif de plancher de coffre selon l'une des revendications 1 ou 2, **caractérisé en ce que** le dossier (22) vient au moins en contact avec un siège avant (26) dans l'état de déploiement maximal.

4. Dispositif de plancher de coffre selon l'une des revendications 1 à 3, **caractérisé en ce que** dans l'état de déploiement maximal, le coussin d'assise (24) est entièrement recouvert par l'élément de plancher (16).

5. Dispositif de plancher de coffre selon l'une des revendications 1 à 4, **caractérisé en ce qu'**un plancher supplémentaire (28), en particulier réglable en hauteur, est prévu pour former une surface de chargement sensiblement plane avec l'élément de plancher (16).

6. Dispositif de plancher de coffre selon l'une des revendications 1 à 5, **caractérisé en ce que** l'élément de plancher (16) et/ou le plancher supplémentaire (28) et/ou le plancher complémentaire (44) sont réglables en longueur, en particulier télescopiques.

7. Dispositif de plancher de coffre selon l'une des revendications 1 à 6, **caractérisé en ce qu'**au moins un dispositif d'actionnement (42) est prévu pour déplacer l'élément de plancher (16) et/ou pour déplacer le dossier (22) par rapport à l'élément de plancher (16).

8. Dispositif de plancher de coffre selon l'une des revendications 1 à 7, **caractérisé en ce que** l'élément de plancher (16) peut être bloqué par un dispositif de blocage (34) dans l'état rétracté.

9. Véhicule à moteur avec un premier dispositif de plancher de coffre (12) selon l'une des revendications 1 à 8 pour un côté conducteur et avec un deuxième dispositif de plancher de coffre (14) selon l'une des revendications 1 à 8 pour un côté passager, dans lequel le premier dispositif de plancher de coffre (12) et le deuxième dispositif de plancher de coffre (14) sont symétriques en miroir l'un par rapport à l'autre.
